Europäisches Patentamt

European Patent Office

Office européen des brevets

(19)

(11) Veröffentlichungsnummer: **0 125 582 B1**

(12) # EUROPÄISCHE PATENTSCHRIFT

(45) Veröffentlichungstag der Patentschrift: **18.03.92**

(51) Int. Cl.5: **C08L 75/04**, C09J 175/00,
//(C08L75/04,83:12)

(21) Anmeldenummer: **84105045.3**

(22) Anmeldetag: **04.05.84**

Die Akte enthält technische Angaben, die nach
dem Eingang der Anmeldung eingereicht wurden
und die nicht in dieser Patentschrift enthalten sind.

---

(54) **Verwendung eines expandierenden Polyurethanklebstoffes zum Verbinden vom Dämmstoffen mit Gebäudeteilen.**

---

(30) Priorität: **11.05.83 DE 3317193**

(43) Veröffentlichungstag der Anmeldung:
**21.11.84 Patentblatt 84/47**

(45) Bekanntmachung des Hinweises auf die
Patenterteilung:
**18.03.92 Patentblatt 92/12**

(84) Benannte Vertragsstaaten:
**AT BE CH DE FR GB IT LI LU NL SE**

(56) Entgegenhaltungen:
**DE-A- 2 045 852**
**GB-A- 2 053 943**
**US-A- 4 258 140**

(73) Patentinhaber: **Henkel Kommanditgesellschaft auf Aktien**
**Postfach 1100 Henkelstrasse 67**
**W-4000 Düsseldorf-Holthausen(DE)**

Patentinhaber: **G Börner GmbH & Co. KG**
**Seilerweg 10**
**W-6430 Bad Hersfeld(DE)**

(72) Erfinder: **Kluth, Hermann**
**Degerstrasse 48**
**W-4000 Düsseldorf 1(DE)**
Erfinder: **Bachmann, Robert**
**Marconistrasse 48**
**W-4000 Düsseldorf(DE)**
Erfinder: **Börner, Georg**
**Stresemannallee 30**
**W-6430 Bad Hersfeld(DE)**

---

EP 0 125 582 B1

**Beschreibung**

Die Erfindung liegt auf dem Gebiet der Klebetechnik. Sie schlägt die Verwendung feuchtigkeitshärtender, expandierender Polyurethanklebstoffe beim Fixieren von Dämmstoffen an Gebäudeteilen vor. Die erfindungsgemäße Verwendung bringt insbesondere bei der Herstellung von Flachdächern in Leichtbauweise Vorteile.

Aus der deutschen Offenlegungsschrift 21 18 465 ist es bekannt, Polystyrolschaumstoff auf ein zur Bildung einer Dachbedeckung vorgesehenes Blech mittels einer wässrigen Dispersion zu kleben, wobei eine wasserdampfdurchlässige Zwischenschicht und zwar eine Mineralfaserplatte verwendet wird. Nachteilig ist die lange Trocknungszeit der Dispersionen, die zudem noch von der Luftfeuchtigkeit abhängt. So müssen in der Praxis oftmals zusätzliche Befestigungen durch mechanische Mittel, wie Nägel oder Schrauben angebracht werden, um ein Abheben der Dämmplatten durch Windeinwirkung während der Verlegearbeiten und vor dem Aufbringen der endgültigen Abschlußschicht zu verhindern.

Es ist weiter bekannt, zum Verkleben von Dämmstoffen mit Gebäudeteilen lösungsmittelhaltige Bitumenkleber zu verwenden. Auch bei diesem Klebeverfahren werden mehrere Stunden benötigt, bis die Endfestigkeit der Klebung erreicht ist. Ein weiterer Nachteil, der allerdings auch auf die Dispersionskleber zutrifft, ist der Volumenschwund der Klebefuge beim Trocknen. Um zuverlässige Verklebungen zu erhalten, müssen deshalb insbesondere bei stark unebenen Materialien vergleichsweise dicke Klebstoffschichten verwendet werden, was zu einem relativ hohen Materialverbrauch führt.

Ein weiterer Nachteil der bisher verwendeten Klebstoffe ist fernerhin, daß Dispersionsklebstoffe anfällig gegen Kondenswasser sind und Bitumenklebstoffe nur geringe Temperaturstabilität aufweisen.

Aufgabe der Erfindung ist es, die Nachteile der bisher auf dem Fachgebiet bekannten Klebstoffe hinsichtlich Abbindezeit, Volumenschrumpfung und Anfälligkeit gegen Feuchtigkeit oder erhöhte Temperaturen, z.B. bei Sonneneinstrahlung zu beseitigen.

Gegenstand der Erfindung ist somit die Verwendung von Polyurethanzubereitungen, die bei Feuchtigkeitszutritt und im Verlauf ihrer Verwendung einer Volumenausdehnung unterliegen, als Klebemittel auf dem Bausektor, dadurch gekennzeichnet, daß man für die Verklebungen von Dämmaterialien mit Gebäudeflächen aus einem nicht unter nennenswerten Überdruck stehenden Behälter heraus Zubereitungen verwendet, die in ihren Eigenschaften zwischen PUR-Schaumstoffen und konventionellen PUR-Klebstoffen liegen, beim Aushärten eine Volumenvergrößerung von etwa 100-1000% aufweisen und aus

| | |
|---|---|
| 55 - 80 Gew.-% | Polyurethan-Prepolymer mit endständigen Isocyanatgruppen |
| 0,5 - 8 Gew.-% | Schaumstabilisatoren |
| 10 - 20 Gew.-% | organischen Lösungsmitteln mit Siedepunkten zwischen Raumtemperatur und 60°C und |

gewünschtenfalls bis zu 20 Gew.-% weiteren Hilfsstoffen bestehen Polyurethan-Prepolymere sind seit langem bekannt. Sie haben in der Technik vielfältige Anwendungen und werden in vielfacher Ausgestaltung angeboten. So ist es bekannt, Ein- und Zweikomponenten-Schaumstoffe auf Polyurethanbasis zu formulieren. Derartige Schaumstoffe werden vorwiegend in Aerosoldosen angeboten. Derartige Polyurethanschäume werden beispielsweise in der deutschen Offenlegungsschrift 20 45 852 beschrieben. Die Produkte härten durch Eindiffundieren der Feuchtigkeit, sie werden so eingestellt, daß nach dem Auftrag eine starke Volumenvergrößerung eintritt, was für die Anwendung im Bereich Isolier- und Füllmaterialien gewünscht ist. Aufgrund der großporigen, lockeren Schaumstruktur dieser Produkte werden jedoch nur geringe mechanische Festigkeiten erreicht, so daß Verklebungen mit derartigen Schäumen nicht in Frage kommen. Darüber hinaus ist es schwierig aus Aerosoldosen einen gleichmässigen flächigen Auftrag zu erreichen.

Auf der anderen Seite sind auch Klebstoffe auf Polyurethanbasis bekannt. Diese bestehen entweder aus Prepolymeren mit endständigen Isocyanatgruppen, welche durch Zutritt von Feuchtigkeit härten oder sie werden als sogenannte 2-Komponenten-Produkte formuliert, d.h. es werden direkt vor der Verklebung die Prepolymeren mit einem Härter, etwa einem mehrfunktionellen Alkohol oder einem mehrfunktionellen Amin, vermischt. Bei Polyurethanklebstoffen gibt es zahlreiche Bemühungen in der Fachwelt die Bildung von Schaum zu unterdrücken, um die Festigkeit der Klebefuge nicht negativ zu beeinflussen. So wurden z.B. zahlreiche Zusätze entwickelt, die Wasserspuren oder deren Folgeprodukte abfangen, damit die Schaumbildung unterbleibt.

Für die erfindungsgemäße Verwendung sind die Urethanschäume nicht geeignet, da sie nur aus Aerosoldosen angewendet werden können und da sie aufgrund ihrer großporigen Struktur zu Verklebungen mit zu geringer Festigkeit führen. Ungeeignet sind auch nichtschäumende Polyurethanklebstoffe, da bei der in Rede stehenden Anwendung meist unebene Oberflächen vorliegen, die zu einem erhöhten Materialverbrauch und damit zu erhöhtem Kostenaufwand führen würden.

Es wurde nun überraschend gefunden, daß Polyurethanzubereitungen, die in ihren Eigenschaften zwischen Polyurethanschaumstoffen und konventionellen Polyurethanklebstoffen liegen, hervorragend geeignet sind zur Verklebung von Dämm-Materialien mit Gebäudeteilen.

Die erfindungsgemäßen Polyurethanzubereitungen, die bei Feuchtigkeitszutritt unter Volumensausdehnung härten, enthalten als Hauptbestandteil 55 - 80 Gew.-% eines Polyurethan-Prepolymeren mit endständigen Isocyanatgruppen. Geeignete Polyurethan-Prepolymere werden durch Umsetzung eines mehrfunktionellen Alkohols mit einem mehrfunktionellen Isocyanat im Überschuß erhalten. Geeignete mehrfunktionelle Alkohole weisen im Mittel zwei bis mehr als vier Hydroxylgruppen auf und haben eine OH-Zahl zwischen 50 und 250, insbesondere zwischen 100 und 200. Geeignet sind hier insbesondere mehrfunktionelle Alkohole mit einem Molekulargewicht zwischen 500 und 5000 und unter diesen wiederum die Umsetzungsprodukte von Diolen, Triolen oder Tetraolen mit Ethylenoxid, Propylenoxid oder Glycid. Weiter geeignet sind die Kondensationsprodukte von Tetrahydrofuran. Um die für die erfindungsgemäße Verwendung geeigneten Prepolymeren zu erhalten, ist es bevorzugt, die mehrfunktionellen Alkohole mit aromatischen Isocyanaten der Funktionalität 2 - 3 umzusetzen. Besonders geeignet sind technische Qualitäten des Diphenylmethandiisocyanats, welche eine durchschnittliche Funktionalität zwischen 2,0 und 2,5 aufweisen. Weiterhin geeignet sind aber auch p-Phenylendiisocyanat und Xylylendiisocyanat. Auch aliphatische und cycloaliphatische mehrfunktionelle Isocyanate wie Hexamethylendiisocyanat oder Isophorondiisocyanat können mitverwendet werden. Weniger geeignet sind aromatische mehrfunktionelle Isocyanate mit relativ hohem Dampfdruck wie z.B. Toluylendiisocyanat. Das Verhältnis von OH-Gruppen : Isocyanatgruppen liegt zwischen 1 : 3 und 1 : 11. Dabei werden mit höheren Isocyanatüberschüssen eher niedrigviskose Kleber erhalten, während niedere Isocyanatüberschüsse, etwa 1 : 3 bis 1 : 4, hochviskose, meist nur noch spachtelbare Klebstoffe bedingen.

Es ist dem Polyurethan-Fachmann bekannt, daß die Vernetzungsdichte und damit Härte und Sprödigkeit der Polyurethane mit der Funktionalität der Isocyanatkomponente oder auch des Polyols zunimmt. Es sei hier auf die allgemeine Fachliteratur verwiesen, z.B. auf die Monographie von Saunders und Frisch "Polyurethanes, Chemistry and Technology", Band XVI der Serie High Polymers "Interscience Publishers" New York - London, Teil I (1962)und Teil II (1964).

Die erfindungsgemäß zu verwendenden Polyurethanzubereitungen enthalten weiterhin Schaumstabilisatoren in Mengen von 0,5 - 8 Gew.-%, vorzugsweise von 1 - 4 Gew.-% und insbesondere zwischen 1 und 2 Gew.-%. Als Schaumstabilisatoren werden bevorzugt sogenannte Silikontenside verwendet. Es sind dies Blockcopolymere, die aus einem Polysiloxanblock und einem oder mehreren Polyoxyethylen- und/oder Polyoxypropylenblöcken aufgebaut sind. Derartige Produkte werden in großer Vielzahl im Handel angeboten. Wenn auch über ihre Funktion keine gesicherten Erkenntnisse vorliegen, so ist doch zu vermuten, daß diese Substanzen während des Aushärtevorgangs der Klebstoffe in den noch weichen Schäumen die Schaumblasen stabilisieren und damit an der Koaleszens und am Zusammenfallen hindern. In einer bevorzugten Ausführungsform der Erfindung werden Art und Menge der Silikontenside derart miteinander abgestimmt, daß der Klebstoff beim Aushärten letztendlich eine Volumensvergrösserung von 100 - 1000 %, vorzugsweise 300 - 900 % erfährt. Dies wird beispielsweise mit einer Menge von 0,5 bis 5 Gew.-% des Produktes Rhodorsil-Öl 1605 der Firma Rhône-Poulenc erreicht. Es handelt sich dabei um ein Siloxan-Polyethercopolymer mit einer Viskosität von ca. 620 cSt bei 25°C, einem Stockpunkt von - 38°C und einer Oberflächenspannung bei 25°C von 23,5 mN/m.

Weitere geeignete Silikontenside werden z.B. von I.R. Schmolka in M.J. Schick "Nonionic Surtactants", Vol. 2, erschienen 1967 bei Marcel Dekker, New York beschrieben. Verwiesen sei jedoch auch auf B. Kanner et al., Journal of Cellular Plastics (1979), Seite 315.

Die erfindungsgemäß zu verwendenden Polyurethanzubereitungen enthalten weiterhin Verflüssigungs- bzw. Verdünnungsmittel, die in beschränktem Umfang auch die Funktion eines Treibmittels übernehmen können. Geeignete Verflüssigungsmittel sind organische Lösungsmittel mit Siedepunkten zwischen Raumtemperatur und 60°C. Besonders bevorzugt ist hier die Verwendung nicht brennbarer organischer Lösungsmittel, so etwa die Verwendung von Halogenkohlenwasserstoffen. Besonders bevorzugte Halogenkohlenwasserstoffe mit Siedepunkten im geforderten Bereich sind beispielsweise Trifluortrichlorethan, Monofluortrichlormethan sowie Methylenchlorid. In Anwendungsfällen, bei denen die Brennbarkeit keine Rolle spielt, können andere leicht flüchtige organische Lösungsmittel verwendet werden. So sind z.B. Pentan oder auch Diethylether geeignete Verdünnungsmittel. Die Menge der Verdünnungsmittel ist durch ihre Löslichkeit in den Klebstoffen beschränkt. Es können jedoch problemlos bis zu 25 Gew.-% Fluorkohlenwasserstoffe eingesetzt werden. Bevorzugt ist die Verwendung von 10 - 20 Gew.-%, bei Pentan oder anderen Kohlenwasserstoffen zwischen 4 und 10 Gew.-%. Die Verdünnungsmittel dienen zum Absenken der Viskosität, wie im geringeren Maße zur Förderung der Schaumbildung.

Die erfindungsgemäß zu verwendenden Polyurethanzubereitungen können weiterhin zusätzliche - ansich bekannte - Hilfsstoffe enthalten. So können z.B. Verflüssiger verwendet werden, die die Flammfestigkeit der Polyurethanschäume vergrössern. Gängig sind Phosphor- und/oder Halogenatome enthaltende Verbindungen, wie Trikresylphosphat, Diphenylkresylphosphat, Tris-2-chlorethylphosphat, Tris-2-chlorpropylphosphat und Tris-2,3-dibrompropylphosphat. Zusätzlich können Flammschutzmittel verwendet werden, z.B. Chlorparaffine, Halogenphosphite, Ammoniumphosphat und halogen- und phosphorhaltige Harze.

Die erfindungsgemäß zu verwendenden Klebstoffe können weiterhin phosphorfreie Weichmacher enthalten. Geeignet sind hier z.B. Ester der Phthalsäure, wie z.B. Di-2-ethylhexylphthalat, Diisononyl- und Diisodecylphthalat, Dibutylphthalat, Diisobutylphthalat, Dicylohexylphthalat, Dimethylglykolphthalat, Dicaprylphthalat und Dioctylphthalat. Weiterhin geeignet sind Diester aliphatischer Dicarbonsäuren, wie z.B. Di-2-ethylhexyladipat, Diisodecyladipat sowie die entsprechenden Ester der Sebacinsäure und der Azelainsäure. Weitere geeignete Weichmacher sind Polyester aus Adipinsäure, Sebacinsäure, Azelainsäure oder Phthalsäure mit Diolen, wie Butandiol, Propandiol oder verschiedenen Hexandiolen im Molekulargewichtsbereich zwischen 850 und 8000. Schließlich sind auch die Ester von Fettsäureschnitten mit kurzkettigen aliphatischen Alkoholen, wie Methanol, Ethanol, Butanol, Isobutanol und Isopropanol geeignet. Eine weitere Klasse von geeigneten Weichmachern sind sogenannte Epoxidweichmacher, also epoxydierte Fettsäurederivate, z.B. epoxydierte Triglyceride oder epoxydierte Fettsäuremethyl-, -ethyl- oder -propylester. Es sei hier auf die einschlägige Fachliteratur verwiesen.

Die erfindungsgemäß zu verwendenden Klebstoffe können weiterhin Beschleuniger enthalten. Dies ist insbesondere dann gefordert, wenn die Verklebungen bei Raumtemperatur oder darunter durchgeführt werden sollen. Hier finden die bei Polyurethanschäumen üblichen Beschleuniger Anwendung. Geeignet sind z.B. tertiäre Basen, wie Bis-(N,N,-dimethylamino)-diethylether, Dimethylaminocyclohexan, N,N-Dimethylbenzylamin, N-Methylmorpholin sowie die Umsetzungsprodukte von Dialkyl-($\beta$-hydroxyethyl)-amin mit Monoisocyanaten und Veresterungsprodukte von Dialkyl-($\beta$-hydroxyethyl)-amin und Dicarbonsäuren. Ein weiterer wichtiger Beschleuniger ist das 1,4-Diamino-bicyclo-(2.2.2)-octan. Ferner können nichtbasische Substanzen als Beschleuniger verwendet werden. Hier seien Metallverbindungen genannt beispielsweise Eisenpentacarbonyl, Nickeltratracarbonyl, Eisenacetylacetonat sowie Zinn-(II)-(2-ethylhexoat), Dibutylzinndilaurat oder Molybdänglykolat.

Die Polyurethanzubereitungen können erfindungsgemäß zum Verkleben von Dämmstoffen mit Gebäudeteilen verwendet werden. Dabei zeigen sie den Vorteil, daß unterschiedlichste Substrate miteinander verklebt werden können. So werden nach einer ersten Ausgestaltungsform der Erfindung Dämmstoffe auf Basis organischer Polymerer, wie z.B. Polystyrolschäume oder Polyurethanschäume einerseits mit den unterschiedlichsten am Bau anzutreffenden Materialien andererseits verklebt. Die Verklebung kann beispielsweise erfolgen auf Metallen wie Eisen, Zink, Kupfer oder Aluminium, auch wenn diese einer üblichen Oberflächenbehandlung wie Passivierung, Lackierung oder Überziehung mit Kunststoff unterworfen worden sind. Weiterhin kann die Verklebung erfolgen auf mineralischen Materialien wie Beton, Keramikfliesen, Putz oder Gips. Weiterhin kann auch mit den unterschiedlichsten Kunststoffen verklebt werden, so auch mit Hart-PVC.

Nach einer weiteren Ausgestaltungsform der Erfindung können mit den geschilderten am Bau anzutreffenden Materialien auch mineralische Dämmstoffe, wie z.B. Mineralwolle oder Dämmstoffe auf Basis geblähter Mineralien verklebt werden.

Nach einer besonders bevorzugten Ausführungsform der Erfindung werden die Klebstoffe bei der Fertigung von Flachdächern in Leichtbauweise eingesetzt. Dabei eignen sie sich insbesondere zum Aufkleben von Dämmstoffen auf Trapezeisenblechen. Durch die Volumenausdehnung beim Aushärten durch Feuchtigkeit werden hierbei Unebenheiten überbrückt, so daß nur relativ geringe Klebstoffmengen eingesetzt werden müssen. Ein weiterer Vorteil ist die kurze Aushärtezeit von weniger als 2 Stunden bis zum Erreichen der Endfestigkeit. Dadurch wird verhindert, daß die Lage des Dämmstoffes durch Einwirkung von Windkräften nach dem Verlegen während längerer Zeit verändert werden kann. Schließlich sind die erfindungsgemäßen Verklebungen unempfindlich gegen Wasserdampf und Wärmeeinwirkung wie sie z.B. bei starker Sonneneinstrahlung auftritt.

Beispiele

Die in der nachstehenden Tabelle aufgeführten Substanzmengen wurden bei Raumtemperatur vermischt. Es trat eine leichte Erwärmung bis etwa 60ºC auf. Die Klebstoffe wurden dann 2 Tage gelagert und sodann aus einer Tube etwa 2 mm dick auf Eisenblech aufgetragen. Verklebt wurde ein handelsüblicher Polystyrolschaum. Es wurde im 30 Minuten-Abstand geprüft, ob der Dämmstoff noch ohne Materialbruch zu entfernen war. Die Verklebung fand bei 23ºC und 50 % relativer Luftfeuchtigkeit statt.

In einem zweiten Versuch wurde mittels einer Rakel eine 1,5mm dicke Klebstoffschicht auf einer Glasplatt aufgebracht. Es wurde dann die Schichtdicke nach einer Aushärtezeit von 2 Stunden gemessen.

## T A B E L L E

| Beispiel Nr.: | 1 | 2 | 3 | 4 | 5 | Vergleichsbeispiele 6 | 7 | 8 | 9 |
|---|---|---|---|---|---|---|---|---|---|
| Polyethertriol*1) | 56,0 | 56,0 | 58,0 | 58,0 | 56,0 | 60,0 | 56,0 | 60,0 | |
| Polyetherdiol⊘2) | 10,0 | 10,0 | 10,0 | 10,0 | 10,0 | 10,0 | 10,0 | 10,0 | |
| Tris-chlorpropylphosphat | 30,0 | 30,0 | 30,0 | 30,0 | 30,0 | 30,0 | 30,0 | 30,0 | |
| Silikon-Tensid (Rhodorsil-Öl$^{(R)}$ 1605) | 4,0 | 4,0 | 2,0 | 2,0 | 4,0 | - | 4,0 | - | |
| | 100,0 | 100,0 | 100,0 | 100,0 | 100,0 | 100,0 | 100,0 | 100,0 | |
| Dephenylmethandiisocyanat, techn. Isomerengemisch | 100,0 | 100,0 | 120,0 | 120,0 | 120,0 | 120,0 | 120,0 | 120,0 | |
| Trichlortrifluorethan | 50,0 | - | 15,0 | 20,0 | - | 50,0 | - | - | |
| Trichlorfluormethan | - | 50,0 | 15,0 | - | - | - | - | - | |
| Methylenchlorid | - | - | - | 10,0 | - | - | - | - | |
| n-Pentan | - | - | - | - | 10,0 | - | - | - | |
| | 250,0 | 250,0 | 250,0 | 250,0 | 230,0 | 270,0 | 220,0 | 220,0 | |
| Abbindezeit (Std.) | <2 | <2 | <2 | <2 | <2 | >3 | >3 | >3 | > 8 |
| Aufschäumung einer 1,5 mm Schicht (in mm) | ca. 7 | ca.14 | ca. 9 | ca. 6 | ca.12 | keine | gering | keine | schrumpft |
| | | | | | | Schaumbildung | | | |
| Schaumstruktur nach Härtung ●3) | ++ | ++ | ++ | + | ++ | -- | - | -- | / |

Column 9: handelsüblicher bituminöser Kaltkleber mit 85 % Feststoffgehalt

**T A B E L L E** (Fortsetzung)

Zeichenerklärungen:

1) * Triethanolamin-Propylenoxid-Anlagerungsprodukt, Molekulargewicht ca. 1000

2) ø Polypropylenglykol, Molekulargewicht ca. 1000

3) ● ++ feinzellige, gleichmäßige Schaumstruktur
   + ungleichmäßigere Schaumstruktur
   − extrem grobzellige und ungleichmäßige Schaumstruktur
   −− keine Schaumbildung

## Patentansprüche

1. Verwendung von einkomponentigen Polyurethanzubereitungen, die bei Feuchtigkeitszutritt aushärten und im Verlauf ihrer Verwendung einer Volumenausdehnung unterliegen, als Klebemittel auf dem Bausektor, dadurch gekennzeichnet, daß man für die Verklebung von Dämmaterialien mit Gebäudeflächen aus einem nicht unter nennenswertem Überdruck stehenden Behälter heraus Zubereitungen verwendet, die in ihren Eigenschaften zwischen PUR-Schaumstoffen und konventionellen PUR-Klebstoffen liegen, beim Aushärten eine Volumenvergrößerung von etwa 100 - 1000 % aufweisen und aus

    55 - 80 Gew.-%       Polyurethanprepolymeren mit endständigen Isocyanatgruppen

    10 - 20 Gew.-%       organischen Lösungsmitteln mit Siedepunkten zwischen Raumtemperatur und 60°C
0,5 - 8 Gew.-% Schaumstabilisatoren
und gewünschtenfalls

bis zu 20 Gew.-% weiteren Hilfsstoffen bestehen.

2. Ausführungsforn nach Anspruch 1, dadurch gekennzeichnet, daß als Prepolymere Umsetzungprodukte aromatischer Diisocyanate der Funktionalität 2,0 - 3,0, vorzugsweise 2,0 - 2,5, mit mehrfunktionellen Alkoholen mit einer OH-Zahl zwischen 50 und 250 verwendet werden.

3. Ausführungsform nach den Ansprüchen 1 und 2, dadurch gekennzeichnet, daß als Schaumstabilisatoren Polysiloxane, insbesondere ein Polysiloxan-Polyoxyalkylen-Copolymeres, verwendt werden.

4. Ausführungsform nach den Ansprüchen 1 bis 3, dadurch gekennzeichnet, daß als organische Lösungsmittel Trifluortrichlorethan, Monofluortrichlormethan, Methylenchlorid, Pentan und/oder Diethylether verwendet werden.

5. Ausführungsform nach den Ansprüchen 1 bis 4, dadurch gekennzeichnet, daß in der Polyurethanzubereitung übliche weitere Hilfsstoffe, insbesondere Flammschutzmittel, Weichmacher und/oder Beschleuniger, mitverwendet werden.

6. Ausführungsform nach den Ansprüchen 1 bis 5, dadurch gekennzeichnet, daß Polyurethanzubereitungen verwendet werden, die beim Aushärten eine Volumensvergrößerung von 300 - 900 %, aufweisen.

7. Ausführungsform nach den Ansprüchen 1 bis 6, dadurch gekennzeichnet, daß die Polyurethanzubereitungen zum Verkleben von geschäumten organischen Polymer-Feststoffen, wie Polystyrolschaum, Polyurethanschaum, sowie von Mineralwollen oder Dämmstoffen auf Basis geblähter Mineralien mit Metallen, mineralischen Untergründen, Holz oder Kunststoff verwendet werden.

**Claims**

1. The use of one-component polyurethane preparations which cure on exposure to moisture and undergo an increase in volume in the course of their use as adhesives in the building industry, characterized in that preparations which come between PUR foams and conventional PUR adhesives in their properties, undergo an increase in volume of the order of 100 to 1,000% during curing and consist of
   55 to 80% by weight      isocyanate-terminated polyurethane prepolymers
   10 to 20% by weight      organic solvents having boiling points between room temperature and 60°C
   0.5 to 8% by weight      foam stabilizers
   and, if desired,
   up to 20% by weight other auxiliaries
   are used for bonding insulating materials to the surfaces of buildings from a container not under significant excess pressure.

2. The use claimed in claim 1, characterized in that the prepolymers used are reaction products of aromatic diisocyanates having a functionality of from 2.0 to 3.0 and preferably from 2.0 to 2.5 with polyhydric alcohols having an OH-value of from 50 to 250.

3. The use claimed in claims 1 and 2, characterized in that the foam stabilizers used are polysiloxanes, more particularly a polysiloxane-polyoxyalkylene copolymer.

4. The use claimed in claims 1 to 3, characterized in that trifluorotrichloroethane, monofluorotrichloromethane, methylene chloride, pentane and/or diethyl ether is/are used as organic solvents.

5. The use claimed in claims 1 to 4, characterized in that other standard auxiliaries, particularly flameproofing agents, plasticizers and/or accelerators, are used in the polyurethane preparation.

6. The use claimed in claims 1 to 5, characterized in that the polyurethane preparations used are preparations which undergo an increase in volume during curing of 300 to 900%.

**7.** The use claimed in claims 1 to 6, characterized in that the polyurethane preparations are used for bonding foamed organic polymer solids, such as polystyrene foam, polyurethane foam, and also mineral wools or insulating materials based on expanded minerals to metals, mineral substrates, wood or plastics.

**Revendications**

**1.** Utilisation de préparations de polyuréthane monocomposant, qui durcissent par pénétration d'humidité et qui subissent une expansion de leur volume au cours de leur utilisation, en tant que colles dans le secteur du bâtiment, caractérisée en ce que l'on utilise des préparations à partir d'un récipient qui n'est pas sous surpression notable pour coller des matériaux isolants sur des surfaces de bâtiment, préparations qui se situent, par leurs propriétés entre les mousses PUR et les colles classiques PUR, qui présentent au durcissement une augmentation de volume d'environ 100-1000 % et comprennent :
- 55-80 % en poids de prépolymères de polyuréthane à groupes terminaux isocyanates,
- 10-20 % en poids de solvants organiques à points d'ébullition compris entre la température ambiante et 60°C,
- 0,5-8 % en poids de stabilisants de mousse et

si on le souhaite jusqu'à 20 % en poids d'autres additifs.

**2.** Mode de réalisation selon la revendication 1, caractérisé en ce qu'on utilise comme prépolymères des produits de réaction de diisocyanates aromatiques de fonctionnalité 2,0-3,0, de préférence 2,0-2,5 avec des alcools polyfonctionnels qui ont un indice OH compris entre 50 et 250.

**3.** Mode de réalisation selon les revendications 1 et 2, caractérisé en ce qu'on utilise comme stabilisants de mousses des polysiloxanes notamment un copolymère polysiloxane-polyoxyalkylène.

**4.** Mode de réalisation selon les revendications 1 à 3, caractérisé en ce qu'on utilise comme solvants organiques du trifluorotrichloroéthane, du chlorure de méthylène, du pentane et/ou de l'étherdiéthylique.

**5.** Mode de réalisation selon les revendications 1 à 4, caractérisé en ce qu'on utilise dans la préparation de polyuréthane d'autres additifs usuels, notamment des ignifugeants, des plastifiants et/ou des accélérateurs.

**6.** Mode de réalisation selon les revendications 1 à 5, caractérisé en ce qu'on utilise des préparations de polyuréthane, qui, au durcissement présentent une augmentation de volume de 300-900 %.

**7.** Mode de réalisation selon les revendications 1 à 6, caractérisé en ce qu'on utilise les préparations de polyuréthane pour coller des matériaux solides polymères organiques expansés, tels que la mousse de polystyrène, la mousse de polyuréthane, ainsi que des laines minérales ou des matériaux isolants à base de produits minéraux expansés, avec des métaux, des supports minéraux, bois ou matière plastique.